Europäisches Patentamt

European Patent Office

Office européen des brevets

(11) Numéro de publication: **0 235 030**
**A2**

# DEMANDE DE BREVET EUROPEEN

(21) Numéro de dépôt: 87400343.7

(22) Date de dépôt: **17.02.87**

(51) Int. Cl.⁴: **G 01 N 29/00**

(30) Priorité: **20.02.86 FR 8602331**

(43) Date de publication de la demande:
**02.09.87   Bulletin   87/36**

(84) Etats contractants désignés:
**AT BE CH DE ES GB GR IT LI LU NL SE**

(71) Demandeur: **GAZ DE FRANCE**
**23, rue Philibert Delorme**
**F-75017 Paris  (FR)**

(72) Inventeur: **Dauzat, Dominique**
**2, rue des Frères Lumière**
**F-60200 Compiegne  (FR)**

**Capdevielle, Jean-Pierre**
**5-7- rue Benjamin Raspail**
**F-60100 Creil  (FR)**

(74) Mandataire: **Durand, Yves Armand Louis et al**
**Cabinet Z. Weinstein 20, Avenue de Friedland**
**F-75008 Paris  (FR)**

(54) Procédé de détection des défauts présents dans les pièces métalliques et appareillage pour la mise en oeuvre de ce procédé.

(57) La présente invention concerne un procédé et un appareillage de détection des défauts dans des pièces métalliques.

L'appareillage selon cette invention comprend essentiellement une semelle (S) contenant une multiplicité d'émetteurs-récepteurs (1) d'ondes ultasonores, lesquels ont une position repérée dans la semelle (S) et sont reliés à un système de traitement (D) de données, lui-même relié à un système de visualisation (V).

Cet appareillage permet la visualisation directe des défauts présents dans un cordon de soudure, ou résultant de la corrosion dans une pièce métallique quelconque.

FIG.1

EP 0 235 030 A2

## Description

"Procédé de détection des défauts présents dans les pièces métalliques et appareillage pour la mise en oeuvre de ce procédé"

Le présente invention a esentiellement pour objet un procédé de détection des défauts présents dans les pièces métalliques, et, tels que par exemple les fissures ou analogues dans les joints soudés, ou encore les défauts dus à la corrosion.

L'invention vise également un appareillage pour la mise en oeuvre de ce procédé.

On connait déjà des procédés de détection des défauts dans les joints soudés réalisés entre deux pièces métalliques par exemple et consistant essentiellement à faire passer des ondes ultrasonores suivant un certain angle d'incidence dans le joint pour détecter par réflexion de l'écho sonore les défauts du cordon de soudure et/ou de l'interface entre ce cordon et les pièces métalliques.

Un tel genre de procédé est par exemple décrit dans la demande de brevet européen N° 84 401 413.4 appartenant à la demanderesse, et selon lequel on détectait l'écho sonore réfléchi au cours du temps et on comparait cet écho avec un écho de référence obtenu à l'aide d'une cale-étalon pour déterminer la présence ou l'absence de défauts dans le joint soudé.

Toutefois, ce genre de procédé présente un certain nombre d'inconvénients. Il utilise généralement un seul émetteur-détecteur permettant l'enregistrement d'un écho sonore correspondant au balayage de seulement une partie du joint soudé. L'enregistrement devait être dépouillé par un spécialiste et il convenait de faire un calcul tenant compte de tous les paramètres afin d'identifier précisément la position et la dimension du défaut. Ceci, comme on le comprend, constituait une opération longue, fastidieuse, et uniquement à la portée de spécialistes.

De plus, si le défaut dans le joint soudé était important, il convenait de refaire l'opération d'émission-détection de l'onde ultrasonore. En effet, les procédés connus ne procuraient pas une détection automatique et en continu des défauts, et il convenait de répéter plusieurs fois l'opération pour contrôler le joint soudé dans son intégralité, ce qui comme on le comprend, exigeait du temps et un certain savoir-faire.

La présente invention a pour but de remédier notamment aux inconvénients ci-dessus en proposant un procédé et un appareillage qui permettent de visualiser automatiquement, directement et sans interruption, la position des défauts dans les joints soudés ou encore des défauts résultant de la corrosion sur une pièce métallique quelconque.

A cet effet, l'invention a pour objet un procédé de détection des défauts présents dans les pièces métalliques et tels que par exemple des fissures ou analogues dans les joints soudés, ou encore des défauts dus à la corrosion d'une pièce métallique quelconque, ce procédé étant du type consistant essentiellement à faire passer des ondes ultrasonores dans le joint ou la pièce métallique pour détecter par réflexion de l'écho sonore les défauts présents dans ledit joint ou sur ladite pièce caractérisé en ce qu'on couvre par des onds ultrasonores toute la zone du joint soudé ou de la pièce métallique à contrôler, et on intègre toutes les données nécessaires y compris celles résultant de la réflexion de l'écho, dans un système de traitement et de visualisation pour obtenir automatiquement et à chaque instant une vision directe des défauts.

Suivant une autre caractérstique de ce procédé, la couverture de toute la zone du joint soudé ou de la pièce à contrôler est obtenue par collimation des ondes ultrasonores sur ladite zone pour réaliser le chevauchement des champs acoustiques adjacents de préférence moitié par moitié.

On précisera encore ici que les défauts sont visualisés suivant une vue de dessus et une vue de côté du joint soudé ou de la pièce à contrôler.

On comprend donc que, grâce au procédé de l'invention, on couvrira la zone à contrôler, c'est-à-dire par exemple le cordon de soudure et les zones voisines de ce cordon d'une façon très fiable, et on pourra localiser directement et précisément la position des défauts, et on pourra également connaître immédiatement leurs dimensions.

L'invention vise également un appareillage pour l'exécution du procédé répondant aux caractéristiques ci-dessus, cet appareillage étant essentiellement caractérisé par au moins une semelle contenant une multiplicité d'émetteurs-récepteurs d'ondes ultrasonores, qui ont une position repérée dans la semelle et qui sont reliés à un système de traitement de données et de visualisation directe des défauts.

Selon une autre caractéristique de cet appareillage, à la semelle précitée, est associée une feuille ou analogue en matériau polymère pouvant être traversée par les ondes ultrasonores, ladite feuille étant appliquée par la semelle sur le joint soudé ou la pièce à contrôler.

On précisera encore ici que, suivant un mode de réalisation particulièrement avantageux, la feuille de matériau polymère constitue une bande sans fin entourant la semelle et reposant sur des galets ou analogues prévus sur le pourtour de ladite semelle.

L'appareillage selon cette invention est encore caractérisé par une roue codeuse asservie au déplacement de la semelle sur le joint soudé ou sur la pièce pour déterminer à chaque instant la position de chaque émetteur-récepteur par rapport à un repère d'axes prédéterminé.

Mais d'autres avantages et caractéristiques de l'invention apparaîtront mieux dans la description détaillée qui suit et se réfère aux dessins annexés, donnés uniquement à titre d'exemple, et dans lesquels:

    - la figure 1 est une vue schématique et en élévation d'un appareillage conforme à l'invention pour détecter les défauts d'un joint soudé ;

    - la figure 2 est une vue très schématique de côté et en élévation d'une semelle contenant une multiplicité d'émetteurs-récepteurs d'ondes ultrasonores;

   - les figures 3 et 4 sont des vues schématiques respectivement en plan de dessus et en coupe transversale d'un joint soudé, et illustrent le principe de fonctionnement de l'appareillage selon cette invention ;

   - la figure 5 est une vue schématique et en coupe transversale d'une joint soudé possédant deux défauts, et

   - la figure 6 est une vue de face de l'écran du système de visualisation montrant ces deux défauts.

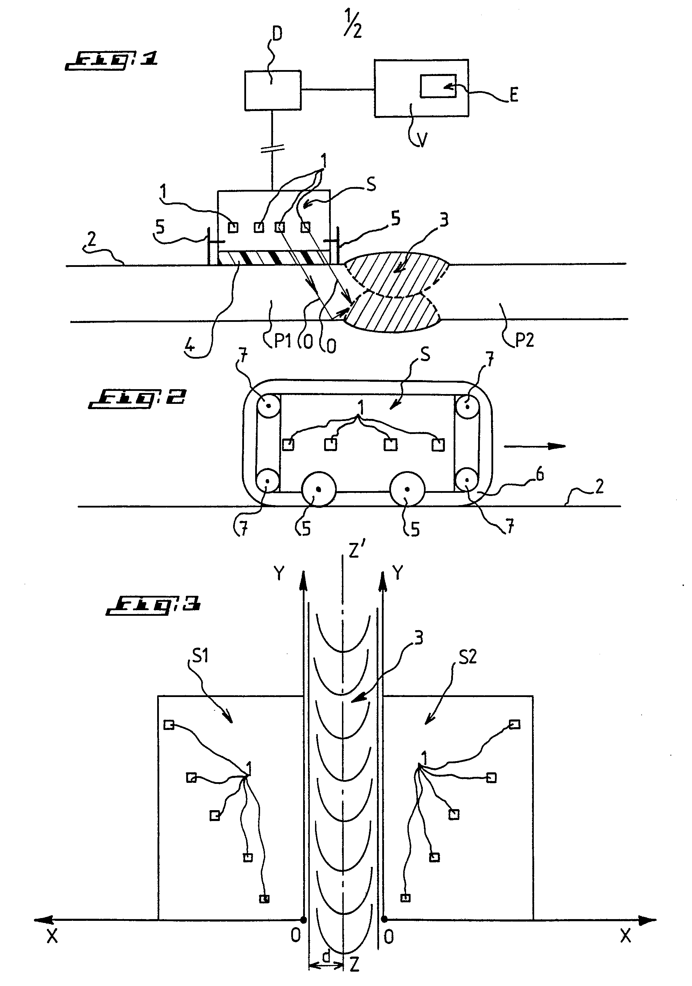

Comme on le voit sur la figure 1, l'appareillage selon cette invention comprend essentiellement une semelle S contenant une multiplicité de traducteurs ou émetteurs-récepteurs 1 d'ondes ultrasonores, ces traducteurs étant agencés suivant des positions relatives bien déterminées dans la semelle 1 et étant reliés à un système de traitement de données D qui est lui-même associé à un système de visualisation V comportant un écran E.

La semelle S est appliquée sur la surface 2 d'une pièce métallique $P_1$ soudée par un cordon de soudure 3 à une autre pièce métallique $P_2$. La semelle S peut être déplacée le long du cordon de soudure ou joint 3 qui est contrôlé grâce aux ondes ultrasonores 0 émanant de chaque traducteur 1 et dont l'écho est réfléchi et détecté.

A la semelle S est associée une feuille ou analogue 4 en matériau polymère qui peut être traversée par les ondes ultrasonores 0. La feuille 4 remplace avantageusement le film d'eau utilisé habituellement et est appliquée par la semelle S contre la surface 2 de la pièce $P_1$ lors du déplacement de ladite semelle. On a montré schématiquement en 5 sur la figure 1 des roues permettant la translation de la semelle S sensiblement parallèlement au cordon de soudure 3.

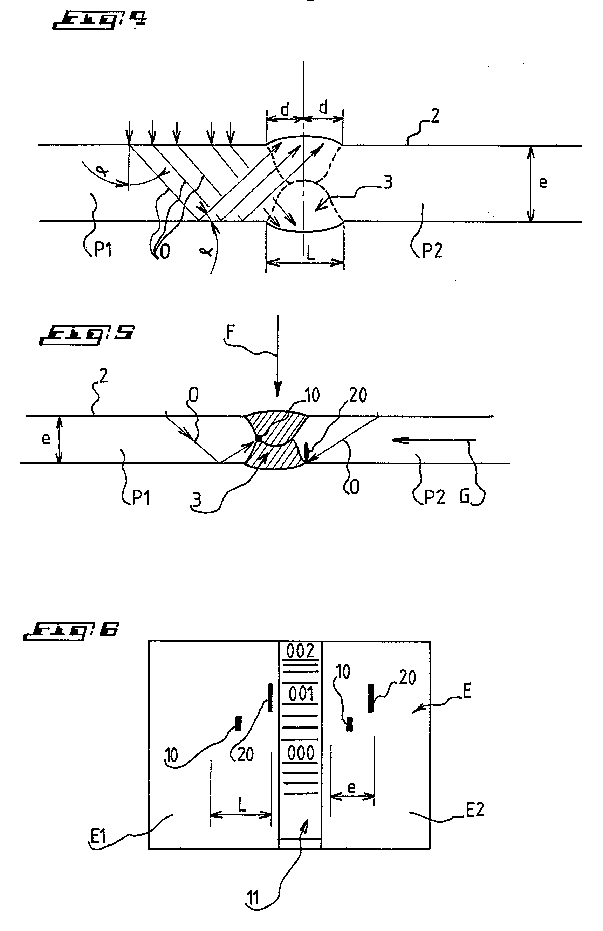

Suivant un exemple de réalisation particulièrement avantageux et visible sur la figure 2, la feuille en matériau polymère 4 constitue une bande sans fin 6 entourant la semelle S et prenant appui sur quatre galets 7 prévus sensiblement aux quatre coins de ladite semelle.

Ainsi, comme on le comprend, la semelle S en roulant sur la surface 2 de la pièce $P_1$, fonctionnera à la manière d'une chenillette, puisque la bande sans fin 6 appliquée par la semelle contre la surface 2 tournera autour des galets 7 lorsque la semelle se déplacera pour détecter les défauts présents dans le cordon de soudure 3 ou encore dans l'interface entre ce cordon et le métal des pièces $P_1$ et $P_2$.

Une roue codeuse (non représentée) est asservie au déplacement de la semelle S le long du joint soudé 3 pour déterminer à chaque instant la position de chaque émetteur-récepteur 1 par rapport à un repère d'axe prédéterminé.

Mais on se reportera aux figures 3 et 4 pour expliquer le fonctionnement et les avantages de l'appareillage selon cette invention.

On a représenté sur la figure 3 deux semelles $S_1$, $S_2$ situées respectivement à gauche et à droite du cordon de soudure 3. La position de chaque traducteur 1 dans chaque semelle est repérée dans un système d'axes OX, OY.

Les deux semelles $S_1$, $S_2$ peuvent être déplacées simultanément ou non, parallèlement à l'axe Z-Z' du cordon de soudure 3.

Les paramètres suivants peuvent être alors déterminés: l'épaisseur e des pièces soudées, $P_1$, $P_2$ ; la largeur L du cordon de soudure 3 ; la position des traducteurs 1 repérés dans le système d'axes OX, OY ; la distance d des semelles $S_1$, $S_2$ par rapport à l'axe Z-Z' du cordon de soudure 3 ; les angles d'incidence $\alpha$ des ondes ultrasonores 0 (voir figure 4) ; et les vitesses de propagation des ondes ultrasonores utilisées pour chaque traducteur 1.

Tous les paramètres ci-dessus ainsi que les signaux correspondant à l'écho sonore réfléchi par les défauts du cordon de soudure 3 sont intégrés dans le système de traitement D (figure 1), ce qui permet de visualiser directement et automatiquement sur l'écran E les défauts de la zone contrôlée.

A cet égard, on notera que les ondes ultrasonores 0 sont de préférence collimatées sur la zone à contrôler, et cela pour réaliser le chevauchement des champs acoustiques adjacents, de façon à être certain de couvrir toute la zone soudée à contrôler. Un champ acoustique pourra par exemple recouvrir la moitié du champ acoustique adjacent.

On comprend donc qu'on pourra lire à chaque instant sur le système de visualisation V la position du défaut au fur et à mesure du déplacement de la semelle, ce qui représente un avantage considérable par rapport aux appareils antérieurs, comme on l'a expliqué précédemment.

Les figures 5 et 6 illustrent la visualisation de deux défauts 10 et 20 dans le cordon de soudure 3, cette visualisation étant effectuée sur un écran E du type connu sous la dénomination "P SCAN".

Les ondes ultrasonores émises par les émetteurs-récepteurs 1 étant des ondes transversales et longitudinales, chaque défaut est repéré dans le métal en vue de dessus et en vue de côté comme matérialisé respectivement par les flèches F et G sur la figure 5. La partie gauche $E_1$ de l'écran E visible sur la figure 6 correspond à la vue de dessus, et la partie droite $E_2$ de cet écran E correspond à la vue de côté. Ainsi, les informations visibles sur l'écran E constituent une visualisation directe et complète de la position et des dimensions des défauts 10 et 20 dans le joint 3.

On a montré en 11 entre les deux parties $E_1$ et $E_2$ de l'écran E une bande mobile portant des repères permettant d'évaluer les positions et les dimensions des défauts.

Bien entendu, au fur et à mesure du déplacement de la semelle S le long de l'axe du cordon de soudure 3, les défauts 10 et 20 évolueront sur l'écran E.

Le mouvement de la bande 11 de repérage et des informations correspondant à la vue de dessus et de côté est asservi à une roue codeuse qui détermine, à chaque instant, la position des traducteurs 1 le long de l'axe du cordon de soudure 3.

Cette roue codeuse peut être attelée à la semelle S de toute manière appropriée, et elle peut même constituer l'une des roues 5 (figure 2) permettant le déplacement de la semelle.

Ainsi, la connaissance de la position de chaque traducteur 1 grâce à la roue codeuse, permet la visualisation de la position et de la dimension des défauts détectés sur un écran E, et si on le souhaite, leur stockage dans une mémoire pour réaliser une visualisation ultérieure. Une telle visualisation ultérieure permet avantageusement, lors de contrôles périodiques, d'évaluer l'évolution ou la création des défauts au cours du temps, et d'en conserver une trace.

On a donc réalisé suivant l'invention un appareillage qui permet à chaque instant de visualiser très précisément les défauts éventuellement présents dans un joint soudé.

Un tel appareillage peut être utilisé pour d'autres applications, telles que celle consistant à évaluer par exemple l'importance de la corrosion dans une conduite ou sur une pièce métallique quelconque. Dans ce cas, la visualisation des défauts de corrosion s'effectuera suivant le même principe que celui décrit précédemment à propos du cordon de soudure, étant entendu qu'ici la semelle sera déplacée le long de la conduite ou sur la pièce à contrôler.

L'invention n'est donc nullement limitée au mode de réalisation décrit et illustré, qui n'a été donné qu'à titre d'exemple.

Au contraire, l'invention comprend tous les équivalents techniques des moyens décrits ainsi que leurs combinaisons, si celles-ci sont effectuées suivant son esprit.

## Revendications

1. Procédé de détection des défauts présents dans les pièces métalliques et tels que par exemple des fissures ou analogues dans les joints soudés, ou encore des défauts dus à la corrosion d'une pièce métallique quelconque, ce procédé étant du type consistant à faire passer des ondes ultrasonores dans le joint ou la pièce métallique pour détecter par réflexion de l'écho sonore les défauts présents dans ledit joint ou sur ladite pièce, caractérisé en ce qu'on couvre par des ondes ultrasonores toute la zone du joint soudé ou de la pièce métallique à contrôler et on intègre toutes les données nécessaires y compris celles résultant de la réflexion de l'écho dans un système de traitement et de visualisation pour obtenir automatiquement et à chaque instant une vision directe des défauts.

2. Procédé selon la revendication 1, caractérisé en ce que la couverture de toute la zone du joint soudé ou de la pièce à contrôler est obtenue par collimation des ondes ultrasonores sur ladite zone pour réaliser le chevauchement des champs acoustiques adjacents de préférence moitié par moitié.

3. Procédé selon la revendication 1 ou 2, caractérisé en ce que les défauts sont visualisés suivant une vue de dessus et une vue de côté du joint soudé ou de la pièce métallique.

4. Appareillage pour l'exécution du procédé selon l'une des revendications 1 à 3, caractérisé par au moins une semelle (S) contenant une multiplicité d'émetteurs-récepteurs (1) d'ondes ultrasonores (0), qui ont une position repérée dans la semelle et sont reliés à un système de traitement de données (D) et de visualisation (V) directe des défauts.

5. Appareillage selon la revendication 4, caractérisé en ce qu'à la semelle (S) est associée une feuille ou analogue (4) en matériau polymère appliquée par la semelle sur le joint soudé ou la pièce à contrôler (3).

6. Appareillage selon la revendication 4 ou 5, caractérisé en ce que la feuille précitée constitue une bande sans fin (6) entourant la semelle et reposant sur des galets ou analogues (7) prévus sur le pourtour de la semelle (S).

7. Appareillage selon l'une des revendications 4 à 6 caractérisé par une roue codeuse asservie au déplacement de la semelle (S) le long du joint soudé (3) ou sur la pièce métallique pour déterminer à chaque instant la position de chaque émetteur-récepteur (1) par rapport à un repère d'axe prédéterminé.

*Fig. 1*

*Fig. 2*

*Fig. 3*

**Fig 4**

**Fig 5**

**Fig 6**